# EUROPEAN PATENT SPECIFICATION

(11) **EP 4 124 480 B1**
(45) Date of publication and mention of the grant of the patent: **25.02.2026**
(21) Application number: 22152771.6
(22) Date of filing: 21.01.2022
(51) Int. Cl.: B60H 1/00

(54) **HEATING, VENTILATION, AND AIR CONDITIONING CASE WITH MULTI-POSITION DOOR FOR CASE RECIRCULATION**
HEIZUNGS-, LÜFTUNGS- UND KLIMATISIERUNGSGEHÄUSE MIT TÜR MIT MEHREREN POSITIONEN FÜR GEHÄUSEREZIRKULATION
BOÎTIER DE CHAUFFAGE, DE VENTILATION ET DE CLIMATISATION AVEC PORTE MULTIPOSITIONS POUR LA RECIRCULATION DU BOÎTIER

(30) Priority: 29.07.2021 US 202117388587
(43) Date of publication of application: 01.02.2023
(73) Proprietor: Rivian IP Holdings, LLC, Irvine CA 92606 (US)
(72) Inventor: HE, Jing, Plymouth, 48170 (US); LEADBETTER, Jamie, 48170, Plymouth (US); HUANG, Henry, Plymouth, 48170 (US); ABREGO, Armando, Plymouth, 48170 (US)
(74) Representative: Murgitroyd & Company

(56) References cited:
- WO-A1-2016/134082
- JP-A- 2010 013 044
- JP-A- 2013 091 367

## Description

### INTRODUCTION

The present invention relates to heating, ventilation, and air conditioning cases. The statements in this section merely provide background information related to the present invention and may not constitute prior art.

Heat pumps may experience degraded performance in cold weather (such as, for example, below -10 °C) due to little-to-no heat from ambient air, reduced refrigerant mass flow rate (because low temperature results in low suction pressure for a compressor which results in low refrigerant density), and operational constraints on the compressor at low temperatures. Moreover, in vehicles such as electric vehicles, an extremely high load (such as, for example, 15 KW or more) may possibly be encountered during evolutions such as, for example, direct current (DC) fast charging (DCFC) or uphill towing. Such a large load may entail that currently-known refrigerant systems be sized well above standard, currently-known configurations.

### BRIEF SUMMARY

The scope of the invention is defined in the appended claims 1,4 and 8. Various disclosed embodiments include illustrative heating, ventilation, and air conditioning (HVAC) devices, HVAC systems, vehicles, and methods.

In an illustrative embodiment, a device includes a case, a case inlet port defined in the case and configured to receive air from the case, a case discharge port defined in the case and configured to receive air from the case inlet port, a case return port defined in the case and configured to receive air from the case discharge port, and a multi-position air door disposed in the case. The multi-position air door includes an outlet port door section repositionable to engage the case inlet port and the case outlet port such that at least a portion of air from the case inlet port is dischargeable from the case outlet port into the case, and an inlet port door section repositionable to engage the case return port such that at least a portion of the air from the case discharge port is recirculatable to the case inlet port.

In another illustrative embodiment, an HVAC system includes a case configured to at least partially recirculate air within the case, a blower disposed in the case and configured to cause air to flow, a first heat exchanger disposed in the case and configured to heat the air, and a second heat exchanger disposed in the case and configured to exchange heat with the air.

In another illustrative embodiment, a vehicle includes a frame, a plurality of rotatable wheels, a drive system configured to rotate the wheels, a cabin, and a heating, ventilation, and air conditioning (HVAC) system. The HVAC system includes a case at least partially disposed in the cabin and configured to at least partially recirculate air within the case, a blower disposed in the case and configured to cause air to flow, a first heat exchanger disposed in the case and configured to heat the air, and a second heat exchanger disposed in the case and configured to exchange heat with the air.

In another illustrative embodiment, a method includes causing air to flow within a heating, ventilation, and air conditioning (HVAC) case, and recirculating at least a first portion of the air flowing within the case without discharging the first portion of the air from the case.

Japanese patent numbers JP2010013044 and JP2013091367 and International patent number WO2016/134082 describe systems that may be useful in understanding the invention.

The foregoing summary is illustrative only and is not intended to be in any way limiting. In addition to the illustrative aspects, embodiments, and features described above, further aspects, embodiments, and features will become apparent by reference to the drawings and the following detailed description.

### BRIEF DESCRIPTION OF THE DRAWINGS

Illustrative embodiments are illustrated in referenced figures of the drawings.
FIG. 1A is a schematic illustration of an illustrative heating, ventilation, and air conditioning (HVAC) case with a multi-position door for case recirculation in a full-case recirculation mode.
FIG. 1B is a schematic illustration of the HVAC case of FIG. 1A in a partial case recirculation mode.
FIG. 1C is a schematic illustration of the HVAC case of FIG. 1A in a cabin recirculation mode.
FIG. 1D is a schematic illustration of the HVAC case of FIG. 1A installable partly within an interior of a structure and partly exterior to the structure.
FIG. 1E is a block diagram in partial schematic form of an illustrative heat pump circuit for use with the HVAC case of FIG. 1A.
FIG. 1F is a graph of pressure versus enthalpy for the heat pump circuit of FIG. 1E.
FIG. 1G is a block diagram in partial schematic form of an illustrative vehicle with the HVAC case of FIGURE 1.
FIG. 1H is a block diagram in partial schematic form of another illustrative vehicle with the HVAC case of FIG. 1A.
FIG. 1I is a flowchart of a method for recirculating air within an HVAC case.
FIG. 2A is a schematic illustration of an illustrative HVAC case with an ambient extractor port, which is not according to the invention.
FIG. 2B is a schematic illustration of the HVAC case of FIG. 2A configured to discharge air to an ambient environment.
FIG. 2C is a schematic illustration of the HVAC case of FIG. 2A installable partly within an interior of a structure and partly exterior to the structure.
FIG. 2D is a block diagram in partial schematic form of an illustrative heat pump circuit.
FIG. 2E is a graph of pressure versus enthalpy for the heat pump circuit of FIG. 2D.
FIG. 2F is a block diagram in partial schematic form of an illustrative vehicle.
FIG. 2G is a flowchart of a method for discharging air from an HVAC case to an ambient environment.
FIG. 3A is a schematic illustration of an illustrative HVAC case with a multi-position door for case recirculation and an ambient extractor port.
FIG. 3B is a schematic illustration of the HVAC case of FIG. 3A installable partly within an interior of a structure and partly exterior to the structure.
FIG. 3C is a block diagram in partial schematic form of a heat pump system suitable for use with the HVAC cases of FIGS. 1A, 2A, and/or 3A.
FIG. 3D is a block diagram of an illustrative HVAC controller.
FIG. 3E is a block diagram in partial schematic form of an illustrative vehicle with the HVAC case of FIG. 3A.

Like reference symbols in the various drawings generally indicate like elements.

### DETAILED DESCRIPTION

In the following detailed description, reference is made to the accompanying drawings, which form a part hereof. In the drawings, similar symbols typically identify similar components, unless context dictates otherwise. The illustrative embodiments described in the detailed description, drawings, and claims are not meant to be limiting. Other embodiments may be utilized, and other changes may be made, without departing from the scope of the invention as defined in the appended claims.

Given by way of overview, various disclosed embodiments include illustrative heating, ventilation, and air conditioning (HVAC) devices, HVAC systems, vehicles, and methods. According to the invention, a HVAC case includes a multi-position door for case recirculation. It will be appreciated that such embodiments can help provide for more rapid heating of air (especially in cold temperatures, where there may be little-to-no heat from ambient air). In some other embodiments, an illustrative HVAC case includes an ambient extractor port. In some such embodiments, a condenser in the HVAC case can reject excessive heat to an ambient environment, thereby helping a condenser exterior to a structure and a heat exchanger exterior to the structure to provide increased cooling to a heat load exterior to the structure beyond that cooling achievable with only the condenser exterior to the structure. In some other embodiments, an illustrative HVAC case may include a multi-position door for case recirculation and an ambient extractor port.

Now that a non-limiting overview has been given, details of various embodiments will be set forth below by way of non-limiting examples provided by way of illustration only and not of limitation.

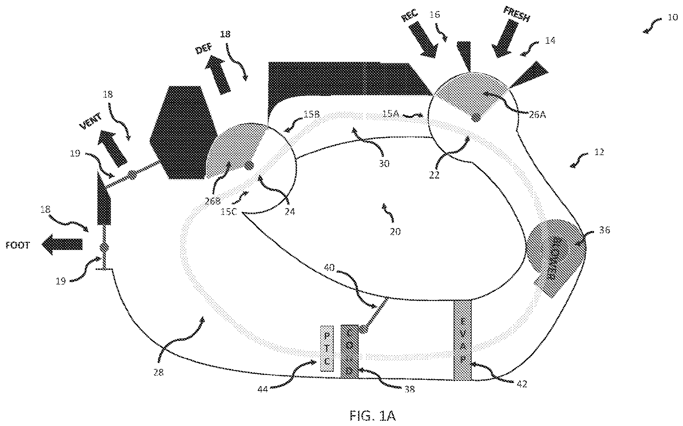

Referring now to FIGURES 1A-1C, in various embodiments an illustrative device such as an HVAC case 10 includes a case 12, an ambient (fresh) inlet port 14 defined in the case 12 and configured to receive air from ambient air external to a structure (such as, without limitation, a passenger cabin of a vehicle but not shown in FIGURE 1A), a recirculation inlet port 16 defined in the case 12 and configured to receive air from the structure, and at least one discharge port 18 configured to discharge at least a portion of air from the case 12 to the structure.

In various embodiments the HVAC case 10 also includes a case inlet port 15C defined in the case 12 and configured to receive air from the case 12, a case discharge port 15B defined in the case 12 and configured to receive air from the case inlet port 15C, a case return port 15A defined in the case 12 and configured to receive air from the case discharge port 15B.

According to the invention a multi-position air door 20 is disposed in the case 12. The multi-position air door 20 includes an outlet port door section 22 repositionable to engage the case inlet port 15C and the case outlet port 15B such that at least a portion of air from the case inlet port 15C is dischargeable from the case outlet port 15B into a portion 30 of a duct 28 in the case 12. The multi-position air door 20 also includes an inlet port door section 24 repositionable to engage the case return port 15A such that at least a portion of the air from the case discharge port 15B is recirculatable to the case inlet port 15C. That is, at least a portion of the air is recirculatable within the duct 28 in the case 12.

As will be explained below, such embodiments can help provide for more rapid heating of air (especially in cold temperatures, where there may be little-to-no heat from ambient). Structural and airflow control components of the HVAC case 10 will be discussed first, followed by heat transfer system components of higher-level systems.

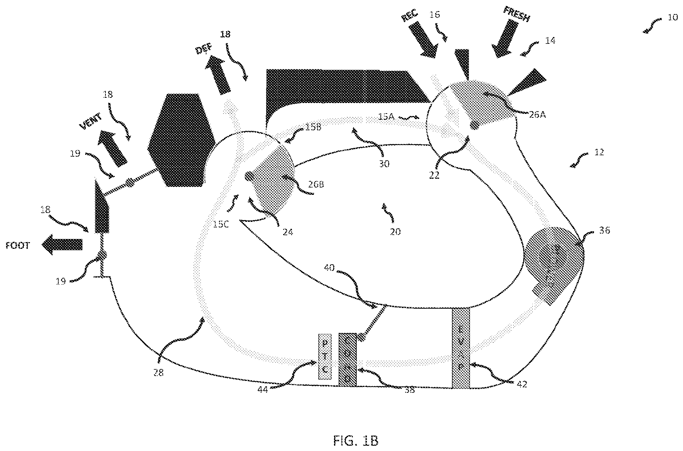

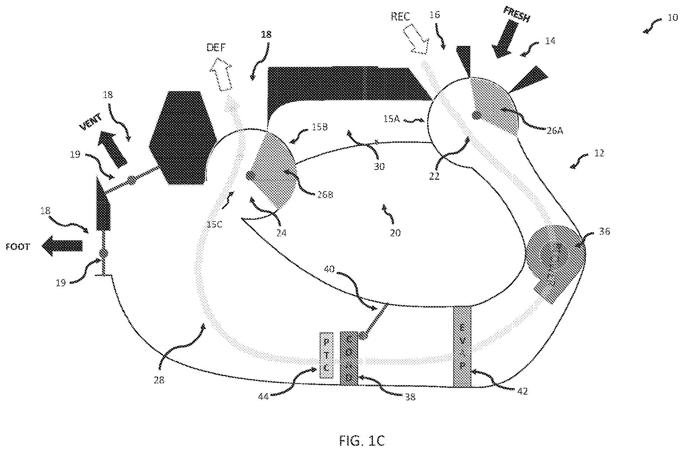

In various embodiments the inlet port door section 22 includes a sealing member 26A and the outlet port door section 24 includes a sealing member 26B. In various embodiments the sealing member 26A is suitably sized and shaped to engage at least one port chosen from the ambient inlet port 14, the case return port 15A, and the recirculation inlet port 16. For example, the inlet port door section 22 is positionable such that the sealing member 26A seals (e.g., fully sealingly engages) the ambient inlet port 14 and the recirculation inlet port 16 simultaneously, hence blocking the ambient inlet port 14 and the recirculation inlet port 16 and allowing air to flow from the case return port 15A only, as shown in FIGURE 1A. The inlet port door section 22 is also positionable such that the sealing member 26A fully seals (e.g., fully sealingly engages) the ambient inlet port 14 but only partially seals (e.g., partially sealingly engages) the recirculation inlet port 16 (FIGURE 1B) or does not seal (e.g., does not sealingly engage) the recirculation inlet port 16 at all (FIGURE 1C), hence allowing air to flow from both the case return port 15A and the recirculation inlet port 16. The inlet port door section 22 may be positionable such that the sealing member 26A fully seals (e.g., fully sealingly engages) the case return port 15A but only partially seals (e.g., partially sealingly engages) the recirculation inlet port 16 (from zero percent blockage to full blockage), hence adjusting proportion of airflow from the ambient inlet port 14 and the recirculation inlet port 16. The inlet port door section 22 may also be positionable such that the sealing member 26A only partially seals (e.g., partially sealingly engages) the ambient inlet port 14 (from zero percent blockage to full blockage).

In various embodiments the sealing member 26B is suitably sized and shaped to engage at least one port chosen from its associated discharge port 18 (such as a "defrost" discharge port 18), the case inlet port 15C, and the case discharge port 15B. For example, the outlet port door section 24 is positionable such that the sealing member 26B fully seals (e.g., fully sealingly engages) its associated discharge port 18 and allows all air entering the case inlet port 15C to be discharged via the case discharge port 15B into the portion 30 and return to the case return port 15A via the duct 28, as shown in FIGURE 1A.

It will be appreciated that the configuration shown in FIGURE 1A permits full-case recirculation within the HVAC case 10. In such embodiments, the outlet port door section 24 is repositionable to fully seal (e.g., fully sealingly engage) its associated discharge port 18 such that the air is not dischargeable from the case 12. The inlet port door section 22 is positioned such that the sealing member 26A fully seals (e.g., fully sealingly engages) the ambient inlet port 14 and the recirculation inlet port 16 simultaneously. The outlet port door section 24 is positioned such that the sealing member 26B fully seals (e.g., fully sealingly engages) its associated discharge port 18 and allows all air entering the case inlet port 15C to be discharged via the case discharge port 15B into **the portion** 30 and return to the case return port 15A. Thus, air does not enter the case 12 via the ambient inlet port 14 or the recirculation inlet port 16 and does not exit the case 12 via any of the discharge ports 18. Therefore, air fully recirculates in the duct 28. As will be explained below, such recirculation within the case 12 helps facilitate rapid heating of air.

As another example, the outlet port door section 24 is also positionable such that the sealing member 26B does not seal (e.g., not sealingly engage) its associated discharge port 18 and permits a portion of the air entering the case inlet port 15C to be discharged from both its associated discharge port 18 and the case discharge port 15B. The portion of air discharged into the portion 30 via the case discharge port 15B then returns to the case return port 15A, as shown in FIGURE 1B.

It will be appreciated that the configuration shown in FIGURE 1B permits partial-case recirculation within the HVAC case 10. In such embodiments, the outlet port door section 24 is repositionable to open (e.g., not fully sealingly engage) the at least one discharge port 18 (such as the "defrost" discharge port 18) such that a portion of the air is dischargeable from the case 12 to the structure and another portion of the air is recirculatable in the case 12. The inlet port door section 22 is positioned such that the sealing member 26A sealingly engages the ambient inlet port 14 and a portion of the recirculation inlet port 16 simultaneously. As such, air can be received through a portion of the recirculation inlet port 16. The outlet port door section 24 is positioned such that the sealing member 26B does not fully sealingly engage its associated discharge port 18 and permits a portion of the air entering the case inlet port 15C to be discharged via the case discharge port 15B into the portion 30 and return to the case return port 15A. Thus, a portion of air enters the case 12 via the recirculation inlet port 16, another portion of air exits the case 12 via the discharge port 18 associated with the outlet port door section 24, and another portion of air is discharged via the case discharge port 15B into the portion 30, returns to the case return port 15A, and recirculates in the duct 28 to the case inlet port 15C.

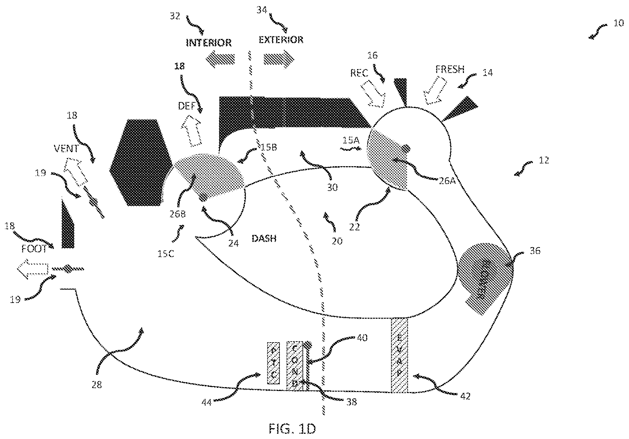

As another example and as shown in FIGURE 1C, the HVAC case 10 is configured for full-cabin recirculation. For example, the outlet port door section 24 is also positionable such that the sealing member 26B fully seals (e.g., fully sealingly engages) the case discharge port 15B and causes all air entering the case inlet port 15C to be discharged via the associated discharge port 18 (FIGURE 1C). Thus, no air is discharged from the case discharge port 15B to the portion 30. The outlet port door section 24 may also be positionable such that the sealing member 26B fully seals (e.g., fully sealingly engages) the case inlet port 15C and only permits air flowing in the duct 28 to be discharged from other discharge ports 18, such as a "vent" discharge port 18 or a "foot" discharge port 18. These other discharge ports 18 not associated with the outlet port door section 24 are openable (FIGURE 1D) and closeable (FIGURES 1A-1C) via an associated air door 19. The inlet port door section 22 is positionable such that the sealing member 26A sealingly engages the ambient inlet port 14 and a portion of the recirculation inlet port 16 simultaneously. As such, air can be received through a portion of the recirculation inlet port 16. Thus, air enters the case 12 via the recirculation inlet port 16, circulates in the duct 28, and exits the case 12 via the discharge port 18 associated with the outlet port door section 24 (without recirculating via the portion 30 and the case return port 15A). It will be appreciated that this configuration entails no recirculation within the case 12.

Referring additionally to FIGURE 1D, in various embodiments the HVAC case 10 may be configured to be disposed entirely in a structure or disposed partially in the structure and partially exterior to the structure. For example and without limitation, a portion 32 of the case 12 may be disposed in an interior of a structure and a portion 34 of the case 12 may be disposed exterior to the structure. In such embodiments, it will be appreciated that less space in the structure may be used than in embodiments in which the entirety of the HVAC case 10 is disposed in the structure. As mentioned above, in various embodiments and given by way of non-limiting example, the structure may include a passenger cabin of a vehicle. In such embodiments, the potion 32 may be disposed in the passenger cabin and the portion 34 may be disposed exterior to the passenger cabin and in a portion of the vehicle such as a powertrain compartment, an engine compartment, or the like. After HVAC components have been discussed below, location of such heat transfer components relative to a structure will be discussed.

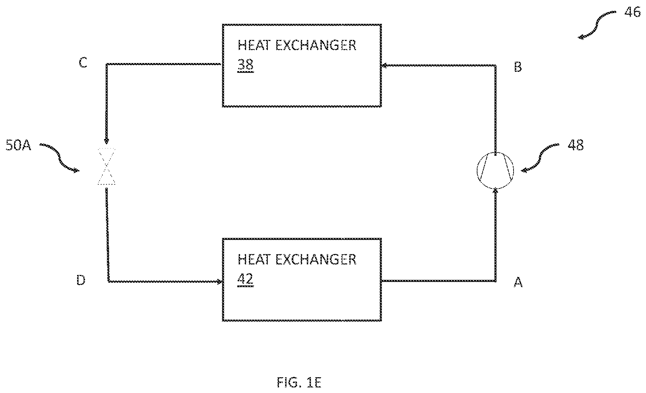

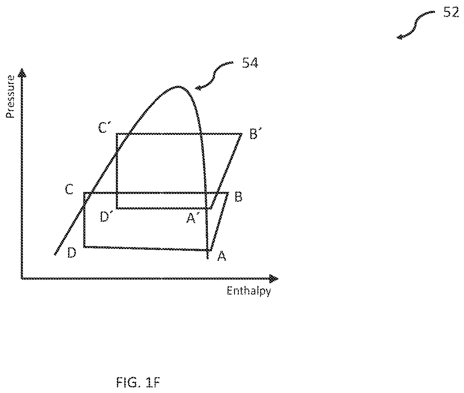

Referring additionally to FIGURES 1E and 1F, in various embodiments the HVAC case 10 includes various HVAC components and, as a result, suitably is a self-contained HVAC system contained within the case 12. In various embodiments the HVAC system suitably is implemented as a heat pump system. For sake of brevity, a heat pump cycle is discussed below by way of non-limiting example. However, it will be appreciated that any type of heating and air conditioning cycles may be used as desired for a particular application.

In various embodiments and as shown in FIGURES 1A-1C, the case 12 is configured to at least partially recirculate air in the case 12 as discussed above. In various embodiments a blower 36 is disposed in the case 12 and is configured to cause air to flow. The blower 36 is any suitable blower. For example, in various embodiments the blower 36 may include brushed or brushless motors.

In various embodiments a heat exchanger 38 is disposed in the case 12 and is configured to heat the air. The heat exchanger 38 is configured to exchange heat between the air and refrigerant flowable in the heat exchanger 38. In various embodiments the heat exchanger 38 suitably is implemented as a condenser. The heat exchanger 38 may include any design suitable for exchanging heat between the air and the refrigerant. For example, the heat exchanger 38 suitably may include single-zone or dual-zone temperature control feature on the structure.

In various embodiments a temperature door 40 may be disposed in the case 12 adjacent the heat exchanger 38. As shown in FIGURES 1A-1C, the temperature door 40 may be positioned in a "full hot" mode to force air to flow through the heat exchanger 38 and not bypass the heat exchanger 38, thereby maximizing the amount of heat exchanged between the air and the refrigerant in the heat exchanger 38. As shown in FIGURE 1D, the temperature door 40 may be positioned in a "full cold" mode to permit air to bypass the heat exchanger 38 instead of flowing through the heat exchanger 38, thereby minimizing the amount of heat exchanged between the air and the refrigerant in the heat exchanger 38. It will be appreciated that the temperature door 40 may be positioned intermediate the position shown in FIGURES 1A-1C ("full hot" mode) and the position shown in FIGURE 1D ("full cold" mode) to select an amount of heat to be exchanged between the air and the heat exchanger 38 as desired for a particular application (that is, a "blend" mode).

In various embodiments a heat exchanger 42 is disposed in the case 12 and is configured to exchange heat with air at least partially recirculated within the case 12 from the heat exchanger 38. The heat exchanger 42 is configured to exchange heat between the air and refrigerant flowable in the heat exchanger 42. In various embodiments the heat exchanger 38 suitably is implemented as an evaporator. The heat exchanger 42 may include any design suitable for exchanging heat between the air and the refrigerant. For example, the heat exchanger 42 suitably may include two-pass or four-pass counterflow design.

As shown in FIGURES 1A-1D, in various embodiments the HVAC case 10 may further include a heating element 44 disposed in the case 12 and configured to heat the air in the case 12. In various embodiments the heating element 44 may include any suitable heating element, such as without limitation an electric heating element like a positive temperature coefficient (PTC) electric heater, or the like.

In various embodiments and as shown in FIGURE 1E, a refrigerant circuit 46 includes a compressor 48, the heat exchanger 38, an expansion device 50A, and the heat exchanger 42. In such embodiments the refrigerant circuit 46 implements a vapor-compression cycle, such as without limitation a heat pump refrigeration cycle.

In various embodiments the compressor 48 is configured to receive refrigerant from the heat exchanger 42, compress the refrigerant, and provide compressed high-temperature, high-pressure refrigerant to the heat exchanger 38. The compressor 48 suitably is any acceptable compressor as desired for a particular application, such as without limitation an electric scroll compressor, a mechanical belt-driven piston compressor, or the like.

In various embodiments the expansion device 50A is configured to receive refrigerant from the heat exchanger 38, expand the refrigerant, and provide expanded low-temperature, low-pressure refrigerant to the second heat exchanger 42. The expansion device 50A suitably is any acceptable expansion device as desired for a particular application, such as without limitation an electronic expansion valve, a thermal expansion valve, an orifice, or the like.

In various embodiments the refrigerant may include any suitable refrigerant as desired for a particular application. For example and given by way of non-limiting examples, in various embodiments the refrigerant may include a synthetic refrigerant like R134a or R1234yf or a natural refrigerant like R744 (carbon dioxide).

In various embodiments and as shown in FIGURE 1F with continued reference to FIGURES 1A-1E, the refrigerant circuit 46 implements a suitable vapor-compression cycle, such as without limitation a heat pump cycle. A graph 52 plots pressure versus enthalpy for the vapor-compression cycle.

At a state point A, low-temperature, low-pressure refrigerant, in pure vapor or predominately vapor, is supplied to a suction inlet of the compressor 48. The compressor 48 compresses the low-temperature, low-pressure refrigerant into high-temperature, high pressure refrigerant vapor (state point B) and discharges the high-temperature, high pressure refrigerant vapor into the heat exchanger 38. The high-temperature, high-pressure refrigerant vapor rejects heat to the air in the case 12, thereby heating the air, and condenses into intermediate-temperature, high-pressure refrigerant (state point C). The intermediate-temperature, high-pressure refrigerant is then expanded in the expansion device 50A into low-temperature, low-pressure refrigerant as a liquid-vapor mixture (state point D). The liquid-vapor mixture D flows into the heat exchanger 42 where it absorbs heat from the air in the case 12 and evaporates into low-temperature, low pressure refrigerant as pure vapor or predominately vapor (state point A) to complete the vapor-compression cycle.

The net effect of the vapor-compression cycle in FIGURE 1F is heated air due to the compressor power output, shown as enthalpy increase from A to B. The air can be further heated when the heating element 44 is turned on. The heated air, when flowing through the heat exchanger 42, results in elevated pressure and density of refrigerant to the suction inlet of the compressor 48. Therefore, the refrigerant mass flow increases -- which demands higher compressor power output and, in turn, yields further heated air. As the process continues, the vapor-compressor cycle moves towards higher and higher pressure regions (from A-B-C-D to A'-B'-C'-D' in FIGURE 1F) and heating capacity of the refrigerant circuit 46 keeps increasing. Thus, in various embodiments the HVAC case 10 and the HVAC system disposed therein can help contribute to providing for more rapid heating of air (especially in cold temperatures, where there may be little-to-no heat from ambient).

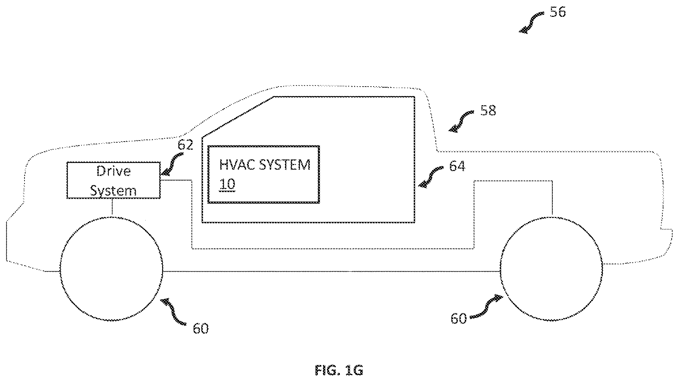

In various embodiments and referring additionally to FIGURE 1G, an illustrative vehicle 56 may include an HVAC system (such as that provided by the HVAC case 10). In various embodiments the vehicle 56 includes a frame 58, rotatable wheels 60, a drive system 62 (such as an internal combustion engine, a hybrid drive system, or an electric motor) configured to rotate the wheels 60, and a cabin 64. The vehicle 56 includes a heating, ventilation, and air conditioning (HVAC) system as described above. In various embodiments, the HVAC system is provided as the HVAC case 10 that includes the case 12 at least partially disposed in the cabin 64 and configured to at least partially recirculate air flowing in the case 12, the blower 36 disposed in the case 12 and configured to cause air to flow, the heat exchanger 38 disposed in the case 12 and configured to heat the air within the case 12, and the heat exchanger 42 disposed in the case 12 and configured to exchange heat with the air within the case 12.

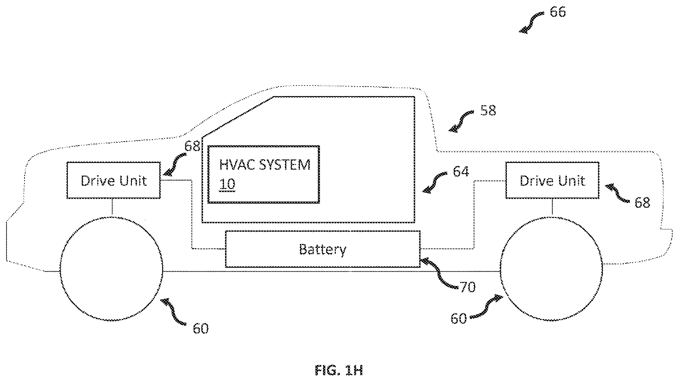

In various embodiments and referring additionally to FIGURE 1H, an illustrative electric vehicle 66 may include an HVAC system (such as that provided by the HVAC case 10). In various embodiments the vehicle 66 includes the frame 58, the rotatable wheels 60, at least one drive unit 68 electrically couplable to a battery 70 (each drive unit 68 including at least one electric motor) configured to rotate the wheels 60, and the cabin 64. The vehicle 66 includes a heating, ventilation, and air conditioning (HVAC) system as described above. In various embodiments, the HVAC system is provided as the HVAC case 10 that includes the case 12 at least partially disposed in the cabin 64 and configured to at least partially recirculate air in the case 12, the blower 36 disposed in the case 12 and configured to cause air to flow, the heat exchanger 38 disposed in the case 12 and configured to heat the air within the case 12, and the heat exchanger 42 disposed in the case 12 and configured to exchange heat with the air within the case 12.

In various embodiments, the HVAC case 10 is configured to be disposed in a manner chosen from disposed entirely in the cabin 64 of the vehicle 56 or 66 and disposed partially in the cabin 64 of the vehicle 56 or 66 and partially exterior to the cabin 64 of the vehicle 56 or 66. For example, in some embodiments the heat exchanger 38 and the heating element 44 may be disposed in the cabin 64 and the heat exchanger 42 and the blower 36 may be disposed exterior to the cabin 64. It will be appreciated that such a mounting scheme saves space inside the cabin 64. It will also be appreciated that locating the blower 36 outside the cabin can help reduce noise, vibration, and harshness (NVH) issues, thereby helping to contribute to a quieter and smoother experience for an occupant.

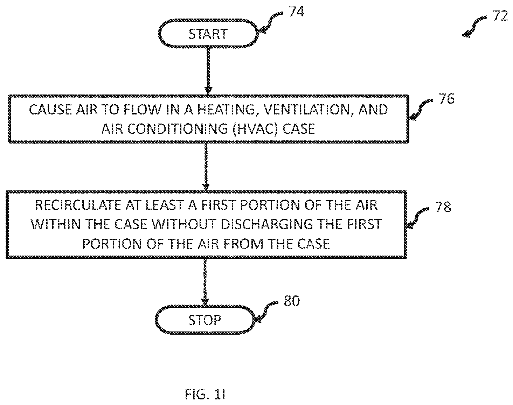

Referring additionally to FIGURE 1I, an illustrative method 72 is provided for recirculating air in an HVAC case. The method 72 begins at a block 74. At a block 76 air is caused to flow in a heating, ventilation, and air conditioning (HVAC) case. At a block 78 at least a first portion of the air is recirculated within the case without discharging the first portion of the air from the case. The method 72 ends at a block 80.

In various embodiments recirculating at least a first portion of the air within the case without discharging the first portion of the air from the case may include recirculating all the air flowing within the case without discharging any of the air from the case.

In various embodiments a second portion of the air may be discharged from the case into a structure, and air may be received from the structure into the case.

In various embodiments the air may be discharged from the case into the structure and air may be received from the structure into the case.

In various embodiments suction pressure of a compressor in a refrigerant circuit associated with the case may be boosted.

In various embodiments the air flowing in the case may be heated with a first heat exchanger disposed in the case and air at least partially recirculated within the case may be presented from the first heat exchanger to a second heat exchanger disposed in the case.

In various embodiments heat may be exchanged between the air at least partially recirculated within the case from the first heat exchanger and refrigerant in the second heat exchanger.

In various embodiments refrigerant may be provided from the second heat exchanger to the compressor and the refrigerant provided from the second heat exchanger may be compressed.

In various embodiments, the air in the case may be heated with at least one heating element.

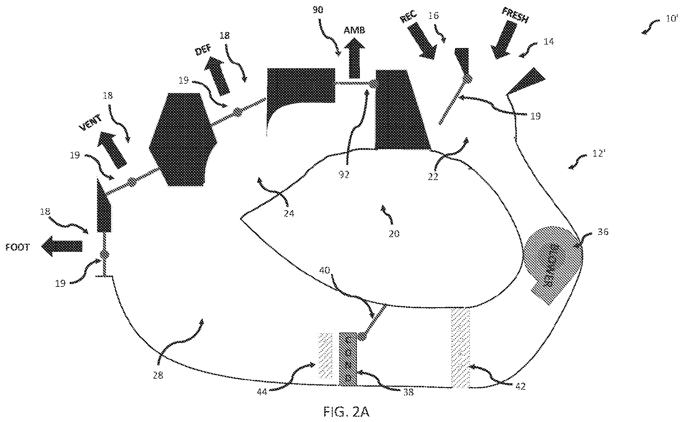

Referring additionally to FIGURES 2A-2B, in various embodiments which are not according to the invention, an HVAC case 10' includes a case 12', the ambient inlet port 14 (fresh), the recirculation inlet port 16, and at least one discharge port 18. An ambient extractor port 90 is disposed within the case 12' and is configured to discharge from the case 12' to an ambient environment exterior to a structure the air provided to the ambient extractor port 90. That is, the air provided to the ambient extractor port 90 is discharged from the case 12' to the ambient environment exterior to the structure - and is not discharged by the ambient extractor port 90 from the case 12' to the structure. While, in some applications, some of the air may be discharged to the structure by one or more of the discharge ports, if desired, the air provided to the ambient extractor port 90 is discharged from the case 12' to the ambient environment exterior to the structure - and is not discharged by the ambient extractor port 90 from the case 12' to the structure. Thus, in various embodiments at least a portion of the air is discharged from the case 12' to an ambient environment exterior to a structure.

As will be explained below, in some such embodiments a condenser in the case 12' can reject excessive heat to ambient air exterior to the structure, thereby assisting a condenser exterior to the structure and a heat exchanger exterior to the structure to provide increased cooling to a heat load exterior to the structure beyond that cooling achievable with only the condenser exterior to the structure.

For sake of brevity, details of components of the HVAC 10' case in common with components of the HVAC case 10 will not be repeated.

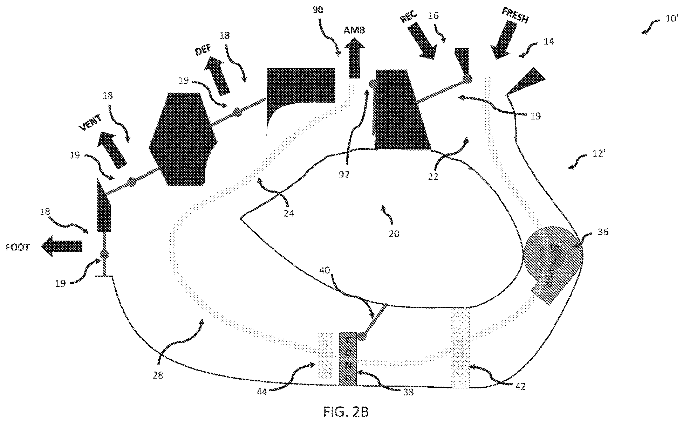

In various embodiments the ambient extractor port 90 includes an air door 92 repositionable between a first position configured to permit discharge of the air from the case 12' to an ambient environment exterior to the structure (FIGURE 2B) and a second position configured to prevent discharge of the air from the case 12' to the ambient environment exterior to the structure (FIGURE 2A).

It will be appreciated that the HVAC case 10' does not include the multi-position air door 20 (FIGURES 1A-1D). To that end, in various embodiments the ambient inlet port 14, the recirculation inlet port 16, and all the discharge ports 18 are openable and closeable via an associated air door 19.

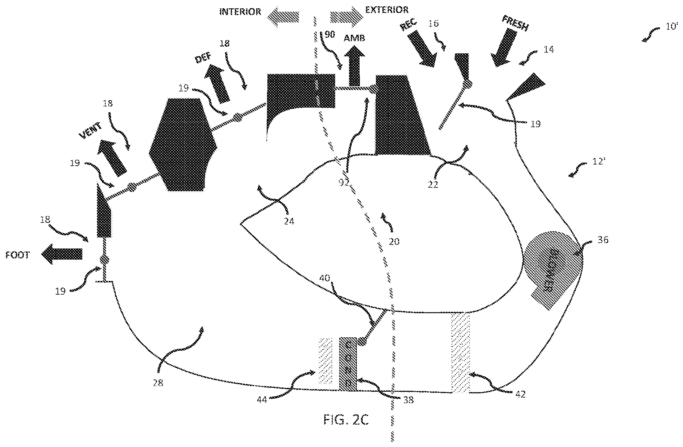

Referring additionally to FIGURE 2C, it will also be appreciated that in various embodiments the HVAC case 10' may be configured to be disposed entirely in a structure or disposed partially in the structure and partially exterior to the structure in the same manner as the HVAC case 10 (FIGURE 1D).

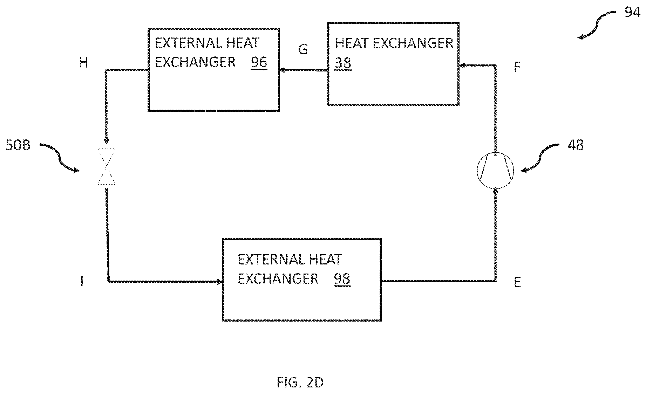

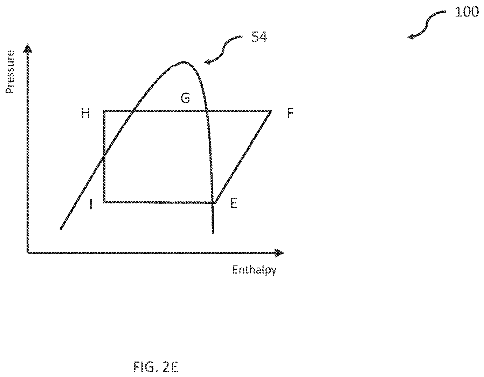

Referring additionally to FIGURES 2D and 2E, in various embodiments the HVAC case 10' includes various HVAC components and, as a result, suitably is a self-contained HVAC system contained within the case 12'. In various embodiments the HVAC system suitably is implemented in a heat pump system. For sake of brevity, a heat pump cycle is discussed below by way of non-limiting example. However, it will be appreciated that any type of heating and air conditioning cycles may be used as desired for a particular application.

In various embodiments and as shown in FIGURES 2A-2B, which are not according to the invention, the blower 36 is disposed in the case 12' and is configured to cause air to flow as discussed above. As also shown in FIGURES 2A and 2B, in various embodiments the heat exchanger 38 is disposed in the case 12' and is configured to heat the air as discussed above. As shown in FIGURES 2A and 2B, the ambient extractor port 90 is disposed within the case 12' and is configured to discharge from the case 12' to an ambient environment exterior to a structure the air provided to the ambient extractor port 90.

In various embodiments and as shown in FIGURE 2D, a refrigerant circuit 94 includes the compressor 48, the heat exchanger 38, an external heat exchanger 96, an expansion device 50B, and an external heat exchanger 98. In such embodiments the refrigerant circuit 46 implements a vapor-compression cycle, such as without limitation a heat pump cycle.

The compressor 48, the heat exchanger 38, and the refrigerant have been discussed above. The expansion device 50B is similar to the expansion device 50A (FIGURE 1E) discussed above but is sized appropriately for use in the refrigerant circuit 94. For sake of brevity their details are not repeated.

In various embodiments the external heat exchanger 96 is disposed exterior to the structure and is configurable to receive the refrigerant from the heat exchanger 38 and to exchange heat between the refrigerant and ambient air. Given by way of non-limiting example, the external heat exchanger 96 may be a condenser disposed exterior to a cabin of an electric vehicle as part of a front-end cooling module and used in a refrigerant circuit configured to cool a battery of the electric vehicle.

In various embodiments the expansion device 50B is couplable to receive the refrigerant from the external heat exchanger 96 and is configured to expand the refrigerant.

In various embodiments the external heat exchanger 98 is disposed exterior to the structure and is configured to exchange heat between the expanded refrigerant and fluid disposed exterior to the structure. Given by way of non-limiting example, the external heat exchanger 98 may be a chiller disposed exterior to a cabin of an electric vehicle and used in a refrigerant circuit configured to cool coolant fluid used to cool a battery of the electric vehicle.

In various embodiments the compressor 48 is coupled to receive refrigerant from the external heat exchanger 98 and is configured to compress the refrigerant and provide compressed refrigerant to the heat exchanger 38.

In various embodiments and as shown in FIGURE 2E with continued reference to FIGURES 2A-2D, the refrigerant circuit 94 implements a suitable vapor-compression cycle, such as without limitation a heat pump cycle. A graph 100 plots pressure versus enthalpy for the vapor-compression cycle.

At a state point E, low-temperature, low-pressure refrigerant, in pure vapor or predominately vapor, is supplied to a suction inlet of the compressor 48. The compressor 48 compresses the low-temperature, low-pressure refrigerant into high-temperature, high pressure refrigerant vapor (state point F) and discharges the high-temperature, high pressure refrigerant vapor into the heat exchanger 38. The high-temperature, high-pressure refrigerant vapor rejects heat to the air in the case 12' and condenses into high-pressure refrigerant at lower temperature (state point G). The high-pressure refrigerant at the state point G enters the external heat exchanger 96, further rejects heat to the ambient environment external to the structure, and condenses into intermediate-temperature, high-pressure refrigerant (state point H). The intermediate-temperature, high-pressure refrigerant is then expanded in the expansion device 50B into low-temperature, low-pressure refrigerant as a liquid-vapor mixture (state point I). The liquid-vapor mixture flows into the external heat exchanger 98 where it absorbs heat from the fluid disposed exterior to the structure and evaporates into low-temperature, low pressure refrigerant as pure vapor or predominately vapor (state point E) to complete the vapor-compression cycle. The coolant fluid disposed exterior to the structure, such as, for example, a water glycol mixture coolant, is then cooled and supplied to the battery for cooling.

It will be appreciated that, in various embodiments, rejecting heat to air in the case 12' with the heat exchanger 38 and then rejecting heat to ambient air with the external heat exchanger 96 creates the heat-rejection capability of the equivalent of a two-stage condenser. It will be appreciated that, in various embodiments, the external heat exchanger 96 may be sized at a maximum size due to space constraints. In such embodiments, it will be appreciated that the combined heat-rejection capability of the heat exchanger 38 and the external heat exchanger 96 may be greater than that of any single heat exchanger that may fit in the location of the external heat exchanger 96. It will also be appreciated that the combined heat-rejection capability of the heat exchanger 38 and the external heat exchanger 96 can, in turn, enable the external heat exchanger 98 to provide additional cooling to its ultimate heat load (such as, for example, a battery of an electric vehicle). Such additional cooling capacity may be desirable during evolutions that can result in increased battery heating, such as without limitation towing uphill or during direct current fast charging.

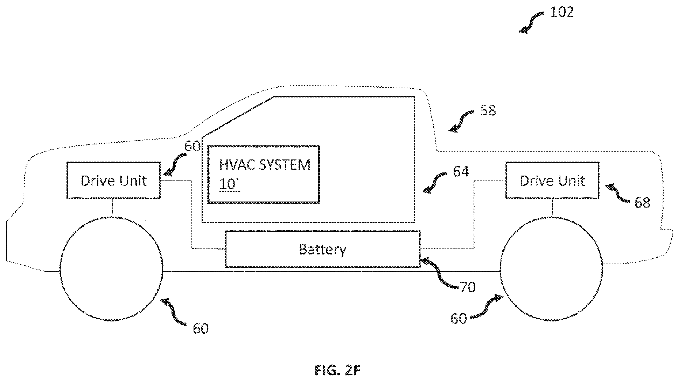

In various embodiments and referring additionally to FIGURE 2F, an illustrative electric vehicle 102 may include an HVAC system (such as that provided by the HVAC case 10' and its associated refrigeration circuit 94). In various embodiments the vehicle 102 includes the frame 58, the rotatable wheels 60, at least one drive unit 68 electrically couplable to a battery 70 (each drive unit 68 including at least one electric motor) configured to rotate the wheels 60, and the cabin 64. The vehicle 102 includes a heating, ventilation, and air conditioning (HVAC) system as described above. In various embodiments, the HVAC system is provided as the HVAC case 10' that includes the case 12' at least partially disposed in the cabin 64, the blower 36 disposed in the case 12' and configured to cause air to flow, the heat exchanger 38 disposed in the case 12' and configured to heat the air, and the ambient extractor port 90 disposed within the case 12' and configured to discharge from the case 12' to an ambient environment exterior to the cabin 64 the air provided to the ambient extractor port 90.

In various embodiments the vehicle 102 includes the refrigeration circuit 94, including the external heat exchanger 96 and the external heat exchanger 98 as discussed above.

In various embodiments, the HVAC case 10' is configured to be disposed in a manner chosen from disposed entirely in the cabin 64 of the vehicle 102 and disposed partially in the cabin 64 of the vehicle 102 and partially exterior to the cabin 64 of the vehicle 102. For example, in some embodiments the heat exchanger 38 and the heating element 44 may be disposed in the cabin 64 and the blower 36 may be disposed exterior to the cabin 64. It will be appreciated that such a mounting scheme saves space inside the cabin 64. It will also be appreciated that locating the blower 36 outside the cabin can help reduce noise, vibration, and harshness (NVH) issues, thereby helping to contribute to a quieter and smoother experience for an occupant.

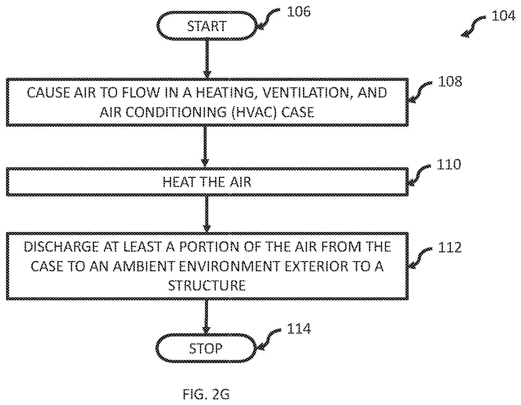

Referring additionally to FIGURE 2G, in various embodiments a method 104 is provided for discharging air from an HVAC case to an ambient environment exterior to a structure. The method begins at a block 106. At a block 108 air is caused to flow in a heating, ventilation, and air conditioning (HVAC) case. At a block 110 the air is heated. At a block 112 at least a portion of the air is discharged from the case to an ambient environment exterior to a structure. The method 104 ends at a block 114.

In various embodiments air may be prevented from being discharged from the case to the ambient environment exterior to the structure.

In various embodiments heating the air may include heating the air with a first heat exchanger disposed in the case and configured to heat the air.

In various embodiments heating the air with a first heat exchanger disposed in the case and configured to heat the air may include exchanging heat between the air and refrigerant in a first heat exchanger disposed in the case and configured to heat the air.

In various embodiments, refrigerant may be provided from the first heat exchanger disposed in the case to a second heat exchanger disposed exterior to the structure and configured to exchange heat with ambient air exterior to the structure. It will be appreciated that various examples of exchanging heat as disclosed herein are provided by way of illustration only and not of limitation and should not be interpreted to be limiting. For example, various exchanges of heat may involve providing heat to and/or removing heat from various airflows or other fluid flows.

In various embodiments a heat source disposed exterior to the structure may be cooled with a third heat exchanger disposed exterior to the structure.

In various embodiments cooling a heat source disposed exterior to the structure with a third heat exchanger disposed exterior to the structure may include expanding refrigerant from the second heat exchanger, exchanging heat between the expanded refrigerant and fluid exterior to the structure to cool the fluid, and exchanging heat between the heat source and the cooled fluid.

In various embodiments expanded refrigerant may be provided from the third heat exchanger to a compressor and the expanded refrigerant may be compressed. In various embodiments compressed refrigerant may be provided to the first heat exchanger.

In various embodiments heating the air may include heating the air with a heating device.

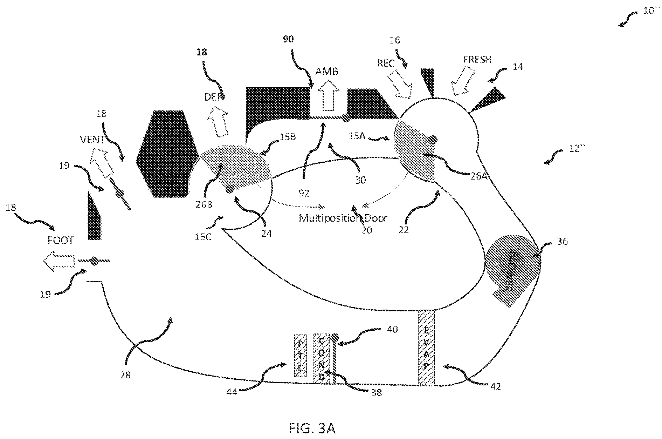

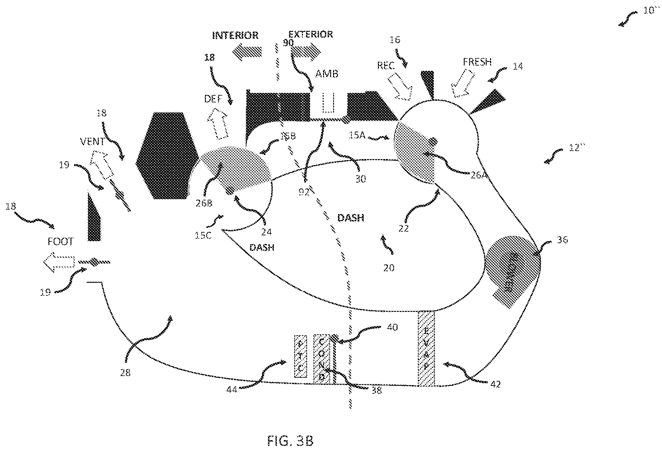

In various embodiments and referring additionally to FIGURES 3A and 3B, an illustrative HVAC case 10" may include the multi-position air door 20 for case recirculation and the ambient extractor port 90.

In such embodiments, the HVAC case 10" includes a case 12", the ambient inlet port 14, the recirculation inlet port 16, at least one discharge port 18, the multi-position air door 20 including the inlet port door section 22 and the outlet port door section 24, and the ambient extractor port 90.

In such embodiments, the HVAC case 10" is configurable for use as an HVAC system with either the refrigerant circuit 46 (FIGURE 1E) for case recirculation or the refrigerant circuit 94 (FIGURE 2D) for maximum external heat load cooling as discussed above.

In various embodiments the HVAC case 10" may be configured to be disposed entirely in a structure or disposed partially in the structure and partially exterior to the structure in the same manner as the HVAC case 10 (FIGURE 1D) or the HVAC case 10' (FIGURE 2C).

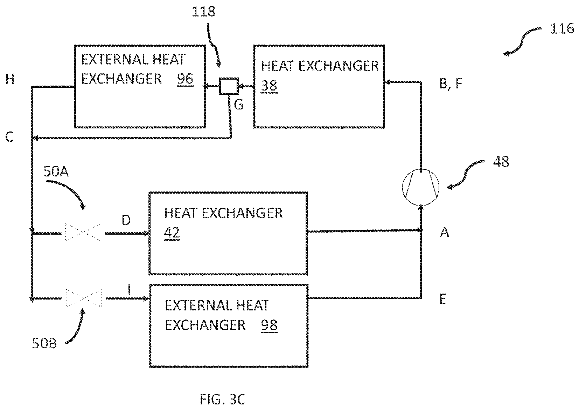

In various embodiments and referring additionally to FIGURE 3C, given by way of non-limiting example an illustrative reconfigurable refrigerant circuit 116 may be configured as either the refrigerant circuit 46 (FIGURE 1E) for case recirculation or the refrigerant circuit 94 (FIGURE 2D) for maximum external heat load cooling. As such, the reconfigurable refrigerant circuit 116 may be used with the HVAC case 10 (FIGURE 1D), the HVAC case 10' (FIGURE 2C), or the HVAC case 10"(FIGURE 3B).

In various embodiments a discharge outlet of the compressor is fluidly coupled to an inlet of the heat exchanger 38. An outlet of the heat exchanger 38 is fluidly coupled to an inlet of a flow selector valve 118. One outlet of the flow selector valve 118 is fluidly coupled to an inlet of the expansion device 50A for the heat exchanger 42 and the expansion device 50B for the external heat exchanger 98. Another outlet of the flow selector valve 118 is fluidly coupled to an inlet of the external heat exchanger 96. An outlet of the external heat exchanger 96 is also fluidly coupled to an inlet of the expansion device 50A for the heat exchanger 42 and the expansion device 50B for the external heat exchanger 98. An outlet of the expansion device 50A is fluidly coupled to an inlet of the heat exchanger 42. An outlet of the heat exchanger 42 is fluidly coupled to a suction inlet of the compressor 48. An outlet of the expansion device 50B is fluidly coupled to an inlet of the external heat exchanger 98. An outlet of the external heat exchanger 98 is also fluidly coupled to a suction inlet of the compressor 48.

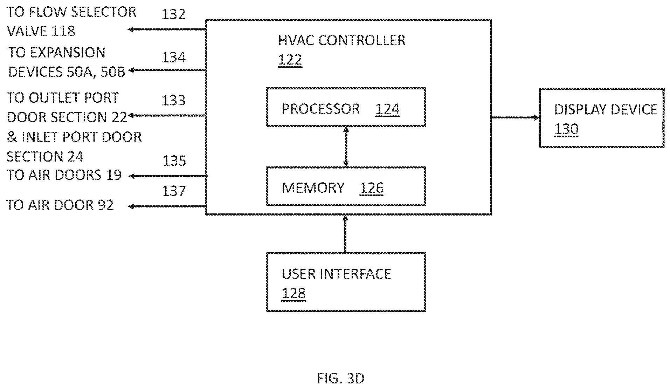

Referring additionally to FIGURE 3D, in various embodiments the flow selector valves 118 and the expansion devices 50A and 50B may receive respective control signals from any suitable source of control signals, such as for example an illustrative HVAC controller 122. It will also be appreciated that the outlet port door section 22, the inlet port door section 22, the air doors 19, and the air door 92 also may receive respective control signals from any suitable source of control signals, such as for example the illustrative HVAC controller 122. Accordingly, it will be appreciated that the HVAC controller 122 may be used with the HVAC case 10 (FIGURE 1D), the HVAC case 10' (FIGURE 2C), or the HVAC case 10"(FIGURE 3B).

In various embodiments the HVAC controller 122 includes a processor 124 and computer-readable media (memory) 126 that includes computer-executable instructions that cause the processor 124 to perform functions described herein. The processor 124 may be any suitable processor as desired, such as a computer processor, a field-programmable gate array (FPGA), or the like. The memory may be any suitable computer memory as desired, such as volatile memory or non-volatile memory. Processors and memory are well known and no further discussion of their construction and operation are necessary for an understanding of disclosed subject matter.

A user interface 128 and a display device 130 are electrically coupled to the HVAC controller 122. The user interface 128 may be any suitable user interface as desired and the display device 130 may be any suitable display device as desired. In some embodiments the display device 130 may be a touch-screen display. In such embodiments the user interface 128 is incorporated with the display device 130. User interfaces and display devices are well known and no further discussion of their construction and operation are necessary for an understanding of disclosed subject matter.

Given by way of non-limiting example, a user may select via the user interface 128 an HVAC mode for rapid cabin heating. In response thereto, the processor 124 is caused to generate a control signal 132 for the flow selector valve 118 and a control signal 134 for the expansion devices 50A and 50B. The control signal 132 causes the flow control valve 118 to fluidly couple output of the heat exchanger 38 to bypass the external heat exchanger 96. The control signal 134 causes the expansion device 50B to close and the expansion device 50A to open, thereby allowing all refrigerant to flow into the heat exchanger 42. The processor 124 is also caused to generate a control signal 133 for the outlet port door section 22 and the inlet port door section 24 and a control signal 135 for the air doors 19. In response to the control signals 133 and 135 the outlet port door section 22 and the inlet port door section 24 and the air doors 19 are positioned as described above to effect recirculation as desired within the case 12.

Given by way of another non-limiting example, a user may select via the user interface 128 an HVAC mode for maximum battery cooling. In response thereto, the processor 124 is caused to generate the control signal 132 for the flow selector valve 118 and the control signal 134 for the expansion devices 50A and 50B. The control signal 132 causes the flow control valve 118 to fluidly couple output of the heat exchanger 38 to the inlet of the external heat exchanger 96. The control signal 134 causes the expansion device 50A to close and the expansion device 50B to open, allowing all refrigerant to flow into the external heat exchanger 98. The processor 124 is also caused to generate the control signal 135 for the air doors 19 and a control signal 137 for the air door 92. In response to the control signals 135 and 137 the air doors 19 and the air door 92 are positioned as described above to effect maximum battery cooling.

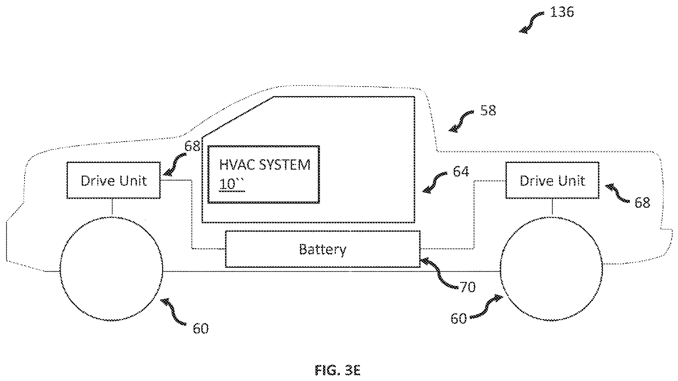

Referring additionally to FIGURE 3E, in various embodiments an illustrative electric vehicle 136 may include an HVAC system (such as that provided by the HVAC case 10" and its associated reconfigurable refrigeration circuit 116). In various embodiments the vehicle 136 includes the frame 58, the rotatable wheels 60, at least one drive unit 68 electrically couplable to the battery 70 (each drive unit 68 including at least one electric motor) configured to rotate the wheels 60, and the cabin 64. The vehicle 136 includes a heating, ventilation, and air conditioning (HVAC) system as described above. In various embodiments, the HVAC system is provided as the HVAC case 10" that includes the case 12" at least partially disposed in the cabin 64, the blower 36 disposed in the case 12" and configured to cause air to flow, the heat exchanger 38 disposed in the case 12" and configured to heat the air, and the ambient extractor port 90 disposed within the case 12" and configured to discharge from the case 12" to an ambient environment exterior to the cabin 64 the air provided to the ambient extractor port 90.

In various embodiments the vehicle 136 includes the reconfigurable refrigeration circuit 116, including the external heat exchanger 96 and the external heat exchanger 98 as discussed above.

In various embodiments, the HVAC case 10" is configured to be disposed in a manner chosen from disposed entirely in the cabin 64 of the vehicle 136 and disposed partially in the cabin 64 of the vehicle 136 and partially exterior to the cabin 64 of the vehicle 136. For example, in some embodiments the heat exchanger 38 and the heating element 44 may be disposed in the cabin 64 and the blower 36 may be disposed exterior to the cabin 64. It will be appreciated that such a mounting scheme saves space inside the cabin 64. It will also be appreciated that locating the blower 36 outside the cabin can help reduce noise, vibration, and harshness (NVH) issues, thereby helping to contribute to a quieter and smoother experience for an occupant.

Those skilled in the art will recognize that at least a portion of the devices and/or processes described herein can be integrated into a data processing system. Those having skill in the art will recognize that a data processing system generally includes one or more of a system unit housing, a video display device, memory such as volatile or non-volatile memory, processors such as microprocessors or digital signal processors, computational entities such as operating systems, drivers, graphical user interfaces, and applications programs, one or more interaction devices (e.g., a touch pad, a touch screen, an antenna, etc.), and/or control systems including feedback loops and control motors (e.g., feedback for sensing position and/or velocity; control motors for moving and/or adjusting components and/or quantities). A data processing system may be implemented utilizing suitable commercially available components, such as those typically found in data computing/communication and/or network computing/communication systems.

The term module, as used in the foregoing/following disclosure, may refer to a collection of one or more components that are arranged in a particular manner, or a collection of one or more general-purpose components that may be configured to operate in a particular manner at one or more particular points in time, and/or also configured to operate in one or more further manners at one or more further times. For example, the same hardware, or same portions of hardware, may be configured/reconfigured in sequential/parallel time(s) as a first type of module (e.g., at a first time), as a second type of module (e.g., at a second time, which may in some instances coincide with, overlap, or follow a first time), and/or as a third type of module (e.g., at a third time which may, in some instances, coincide with, overlap, or follow a first time and/or a second time), etc. Reconfigurable and/or controllable components (e.g., general purpose processors, digital signal processors, field programmable gate arrays, etc.) are capable of being configured as a first module that has a first purpose, then a second module that has a second purpose and then, a third module that has a third purpose, and so on. The transition of a reconfigurable and/or controllable component may occur in as little as a few nanoseconds, or may occur over a period of minutes, hours, or days.

In some such examples, at the time the component is configured to carry out the second purpose, the component may no longer be capable of carrying out that first purpose until it is reconfigured. A component may switch between configurations as different modules in as little as a few nanoseconds. A component may reconfigure on-the-fly, e.g., the reconfiguration of a component from a first module into a second module may occur just as the second module is needed. A component may reconfigure in stages, e.g., portions of a first module that are no longer needed may reconfigure into the second module even before the first module has finished its operation. Such reconfigurations may occur automatically, or may occur through prompting by an external source, whether that source is another component, an instruction, a signal, a condition, an external stimulus, or similar.

For example, a central processing unit of a personal computer may, at various times, operate as a module for displaying graphics on a screen, a module for writing data to a storage medium, a module for receiving user input, and a module for multiplying two large prime numbers, by configuring its logical gates in accordance with its instructions. Such reconfiguration may be invisible to the naked eye, and in some embodiments may include activation, deactivation, and/or re-routing of various portions of the component, e.g., switches, logic gates, inputs, and/or outputs. Thus, in the examples found in the foregoing/following disclosure, if an example includes or recites multiple modules, the example includes the possibility that the same hardware may implement more than one of the recited modules, either contemporaneously or at discrete times or timings. The implementation of multiple modules, whether using more components, fewer components, or the same number of components as the number of modules, is merely an implementation choice and does not generally affect the operation of the modules themselves. Accordingly, it should be understood that any recitation of multiple discrete modules in this disclosure includes implementations of those modules as any number of underlying components, including, but not limited to, a single component that reconfigures itself over time to carry out the functions of multiple modules, and/or multiple components that similarly reconfigure, and/or special purpose reconfigurable components.

In some instances, one or more components may be referred to herein as "configured to," "configured by," "configurable to," "operable/operative to," "adapted/adaptable," "able to," "conformable/conformed to," etc. Those skilled in the art will recognize that such terms (for example "configured to") generally encompass active-state components and/or inactive-state components and/or standby-state components, unless context requires otherwise.

While particular aspects of the present subject matter described herein have been shown and described, it will be apparent to those skilled in the art that, based upon the teachings herein, changes and modifications may be made without departing from the scope of the invention as defined in the appended claims. It will be understood by those within the art that, in general, terms used herein, and especially in the appended claims (for example, bodies of the appended claims) are generally intended as "open" terms (for example, the term "including" should be interpreted as "including but not limited to," the term "having" should be interpreted as "having at least," the term "includes" should be interpreted as "includes but is not limited to," etc.). It will be further understood by those within the art that if a specific number of an introduced claim recitation is intended, such an intent will be explicitly recited in the claim, and in the absence of such recitation no such intent is present. For example, as an aid to understanding, the following appended claims may contain usage of the introductory phrases "at least one" and "one or more" to introduce claim recitations. However, the use of such phrases should not be construed to imply that the introduction of a claim recitation by the indefinite articles "a" or "an" limits any particular claim containing such introduced claim recitation to claims containing only one such recitation, even when the same claim includes the introductory phrases "one or more" or "at least one" and indefinite articles such as "a" or "an" (for example, "a" and/or "an" should typically be interpreted to mean "at least one" or "one or more"); the same holds true for the use of definite articles used to introduce claim recitations. In addition, even if a specific number of an introduced claim recitation is explicitly recited, those skilled in the art will recognize that such recitation should typically be interpreted to mean at least the recited number (for example, the bare recitation of "two recitations," without other modifiers, typically means at least two recitations, or two or more recitations). Furthermore, in those instances where a convention analogous to "at least one of A, B, and C, etc." is used, in general such a construction is intended in the sense one having skill in the art would understand the convention (for example, " a system having at least one of A, B, and C" would include but not be limited to systems that have A alone, B alone, C alone, A and B together, A and C together, B and C together, and/or A, B, and C together, etc.). It will be further understood by those within the art that typically a disjunctive word and/or phrase presenting two or more alternative terms, whether in the description, claims, or drawings, should be understood to contemplate the possibilities of including one of the terms, either of the terms, or both terms unless context dictates otherwise. For example, the phrase "A or B" will be typically understood to include the possibilities of "A" or "B" or "A and B."

The foregoing detailed description has set forth various embodiments of the devices and/or processes via the use of block diagrams, flowcharts, and/or examples. Insofar as such block diagrams, flowcharts, and/or examples contain one or more functions and/or operations, it will be understood by those within the art that each function and/or operation within such block diagrams, flowcharts, or examples can be implemented, individually and/or collectively, by a wide range of hardware, software (e.g., a high-level computer program serving as a hardware specification), firmware, or virtually any combination thereof, limited to patentable subject matter. 101. In an embodiment, several portions of the subject matter described herein may be implemented via Application Specific Integrated Circuits (ASICs), Field Programmable Gate Arrays (FPGAs), digital signal processors (DSPs), or other integrated formats. However, those skilled in the art will recognize that some aspects of the embodiments disclosed herein, in whole or in part, can be equivalently implemented in integrated circuits, as one or more computer programs running on one or more computers (e.g., as one or more programs running on one or more computer systems), as one or more programs running on one or more processors (e.g., as one or more programs running on one or more microprocessors), as firmware, or as virtually any combination thereof, limited to patentable subject matter and that designing the circuitry and/or writing the code for the software (e.g., a high-level computer program serving as a hardware specification) and or firmware would be well within the skill of one of skill in the art in light of this disclosure. In addition, those skilled in the art will appreciate that the mechanisms of the subject matter described herein are capable of being distributed as a program product in a variety of forms, and that an illustrative embodiment of the subject matter described herein applies regardless of the particular type of signal bearing medium used to actually carry out the distribution. Examples of a signal bearing medium include, but are not limited to, the following: a recordable type medium such as a floppy disk, a hard disk drive, a Compact Disc (CD), a Digital Video Disk (DVD), a digital tape, a computer memory, etc.; and a transmission type medium such as a digital and/or an analog communication medium (e.g., a fiber optic cable, a waveguide, a wired communications link, a wireless communication link (e.g., transmitter, receiver, transmission logic, reception logic, etc.), etc.).

## Claims

1. A device comprising:
a case (12);
a case inlet port (15C) defined in the case (12) and configured to receive air from the case (12);
a case discharge port (15B) defined in the case (12) and configured to receive air from the case inlet port (15C);
a case return port (15A) defined in the case (12) and configured to receive air from the case discharge port; **characterized in that** the case includes:
a multi-position air door disposed in the case (12), the multi-position air door including:
an outlet port door section (24) repositionable to engage the case inlet port (15C) and the case discharge port (15B) such that at least a portion of air from the case inlet port (15C) is dischargeable from the case discharge port (15B) into the case (12); and
an inlet port door section repositionable to engage the case return port (15A) such that at least a portion of the air from the case discharge port (15B) is recirculatable to the case inlet port (15C).

2. The device of Claim 1, wherein the outlet port door section (24) is further repositionable to shut at least one discharge port (18) from the case (12) to a structure such that all the air is recirculatable within the case (12); and/or wherein the outlet port door section (24) is further repositionable to at least partially open at least one discharge port (18) from the case (12) to a structure such that a portion of the air is dischargeable from the case (12) to the structure and another portion of the air is recirculatable within the case (12).

3. The device of Claim 1 or 2, wherein the inlet port door is further repositionable to at least partially open a recirculation inlet port (16) configured to receive air from the structure.

4. A heating, ventilation, and air conditioning (HVAC) system comprising a device according to claim 1, wherein the case (12) is configured to at least partially recirculate air within the case (12); the system further comprising:
a blower disposed in the case (12) and configured to cause air to flow;
a first heat exchanger (38) disposed in the case (12) and configured to heat the air; and
a second heat exchanger (42) disposed in the case (12) and configured to exchange heat with the air.

5. The system of Claim 4, wherein the outlet port door section (24) is further repositionable to shut at least one discharge port (18) from the case (12) to a structure such that all the air is recirculatable within the case(12).

6. The system of Claim 4 or 5, wherein the outlet port door section (24) is further repositionable to at least partially open at least one discharge port (18) from the case (12) to a structure such that a portion of the air is dischargeable from the case (12) to the structure and another portion of the air is recirculatable within the case (12); and/or wherein the inlet port door is further repositionable to at least partially open a recirculation inlet port (16) configured to receive air from the structure.

7. The system of any one of claims 4 to 6, further comprising a refrigerant circuit including at least:
a compressor configured to receive refrigerant from the second heat exchanger (42), compress the refrigerant, and provide compressed refrigerant to the first heat exchanger (38); and
an expansion device configured to receive the compressed refrigerant from the first heat exchanger (38), expand the compressed refrigerant, and provide expanded refrigerant to the second heat exchanger (42), and/or comprising a heating element disposed in the case and configured to heat the air in the case (12).

8. A method comprising:
causing air to flow in a case (12) of a device of a heating, ventilation, and air conditioning (HVAC) system according to any one of claims 4 to 7; and
recirculating at least a first portion of the air flowing within the case (12) without discharging the first portion of the air from the case (12).

9. The method of Claim 8, wherein recirculating at least a first portion of the air flowing within the case (12) without discharging the first portion of the air from the case (12) includes recirculating all the air flowing within the case (12) without discharging any of the air from the case (12).

10. The method of Claim 8, further comprising:
discharging a second portion of the air from the case (12) into a structure; and
receiving air from the structure into the case (12); and/or
boosting suction pressure of a compressor in a refrigerant circuit associated with the case (12).

11. The method of Claim 10, further comprising:
heating the air flowing in the case with a first heat exchanger (38) disposed in the case (12); and
presenting air at least partially recirculated within the case (12) from the first heat exchanger (38) to a second heat exchanger (42) disposed in the case (12).

12. The method of Claim 11, further comprising exchanging heat between the air at least partially recirculated within the case (12) from the first heat exchanger (38) and refrigerant in the second heat exchanger (42) and/or providing refrigerant from the second heat exchanger (42) to the compressor and compressing the refrigerant provided from the second heat exchanger (42).

## Patentansprüche

1. Eine Vorrichtung, die Folgendes beinhaltet:
ein Gehäuse (12);
eine Gehäuseeinlassöffnung (15C), die in dem Gehäuse (12) definiert ist und konfiguriert ist, um Luft von dem Gehäuse (12) zu erhalten;
eine Gehäuseabgabeöffnung (15B), die in dem Gehäuse (12) definiert ist und konfiguriert ist, um Luft von der Gehäuseeinlassöffnung (15C) zu erhalten;
eine Gehäuserückführöffnung (15A), die in dem Gehäuse (12) definiert ist und konfiguriert ist, um Luft von der Gehäuseabgabeöffnung zu erhalten; **dadurch gekennzeichnet, dass** das Gehäuse Folgendes umfasst:
eine Lufttür mit mehreren Positionen, die in dem Gehäuse (12) angeordnet ist, wobei die Lufttür mit mehreren Positionen Folgendes umfasst:
einen Auslassöffnungstürabschnitt (24), der repositionierbar ist, um in die Gehäuseeinlassöffnung (15C) und die Gehäuseabgabeöffnung (15B) einzugreifen, sodass mindestens ein Anteil der Luft von der Gehäuseeinlassöffnung (15C) aus der Gehäuseabgabeöffnung (15B) in das Gehäuse (12) abgebbar ist; und
einen Einlassöffnungstürabschnitt, der repositionierbar ist, um in die Gehäuserückführöffnung (15A) einzugreifen, sodass mindestens ein Anteil der Luft von der Gehäuseabgabeöffnung (15B) zu der Gehäuseeinlassöffnung (15C) rezirkulierbar ist.

2. Vorrichtung gemäß Anspruch 1, wobei der Auslassöffnungstürabschnitt (24) ferner repositionierbar ist, um mindestens eine Abgabeöffnung (18) aus dem Gehäuse (12) zu einer Struktur zu schließen, sodass die gesamte Luft innerhalb des Gehäuses (12) rezirkulierbar ist; und/oder wobei der Auslassöffnungstürabschnitt (24) ferner repositionierbar ist, um mindestens eine Abgabeöffnung (18) aus dem Gehäuse (12) zu einer Struktur mindestens teilweise zu öffnen, sodass ein Anteil der Luft aus dem Gehäuse (12) zu der Struktur abgebbar ist und ein anderer Anteil der Luft innerhalb des Gehäuses (12) rezirkulierbar ist.

3. Vorrichtung gemäß Anspruch 1 oder 2, wobei die Einlassöffnungstür ferner repositionierbar ist, um eine Rezirkulationseinlassöffnung (16), die konfiguriert ist, um Luft von der Struktur zu erhalten, mindestens teilweise zu öffnen.

4. Ein Heizungs-, Lüftungs- und Klimatisierungssystem (HLK-System), das eine Vorrichtung gemäß Anspruch 1 beinhaltet, wobei das Gehäuse (12) konfiguriert ist, um Luft innerhalb des Gehäuses (12) mindestens teilweise zu rezirkulieren;
wobei das System ferner Folgendes beinhaltet:
ein Gebläse, das in dem Gehäuse (12) angeordnet ist und konfiguriert ist, um zu bewirken, dass Luft strömt;
einen ersten Wärmetauscher (38), der in dem Gehäuse (12) angeordnet ist und konfiguriert ist, um die Luft zu erwärmen; und
einen zweiten Wärmetauscher (42), der in dem Gehäuse (12) angeordnet ist und konfiguriert ist, um Wärme mit der Luft auszutauschen.

5. System gemäß Anspruch 4, wobei der Auslassöffnungstürabschnitt (24) ferner repositionierbar ist, um mindestens eine Abgabeöffnung (18) aus dem Gehäuse (12) zu einer Struktur zu schließen, sodass die gesamte Luft innerhalb des Gehäuses (12) rezirkulierbar ist.

6. System gemäß Anspruch 4 oder 5, wobei der Auslassöffnungstürabschnitt (24) ferner repositionierbar ist, um mindestens eine Abgabeöffnung (18) aus dem Gehäuse (12) zu einer Struktur mindestens teilweise zu öffnen, sodass ein Anteil der Luft aus dem Gehäuse (12) zu der Struktur abgebbar ist und ein anderer Anteil der Luft innerhalb des Gehäuses (12) rezirkulierbar ist; und/oder wobei die Einlassöffnungstür ferner repositionierbar ist, um eine Rezirkulationseinlassöffnung (16), die konfiguriert ist, um Luft von der Struktur zu erhalten, mindestens teilweise zu öffnen.

7. System gemäß einem der Ansprüche 4 bis 6, das ferner einen Kältemittelkreislauf beinhaltet, der mindestens Folgendes umfasst:
einen Kompressor, der konfiguriert ist, um Kältemittel von dem zweiten Wärmetauscher (42) zu erhalten, das Kältemittel zu komprimieren und dem ersten Wärmetauscher (38) komprimiertes Kältemittel bereitzustellen; und
eine Expansionsvorrichtung, die konfiguriert ist, um das komprimierte Kältemittel von dem ersten Wärmetauscher (38) zu erhalten, das komprimierte Kältemittel zu expandieren und dem zweiten Wärmetauscher (42) expandiertes Kältemittel bereitzustellen, und/oder ein Heizelement beinhaltet, das in dem Gehäuse angeordnet ist und konfiguriert ist, um die Luft in dem Gehäuse (12) zu erwärmen.

8. Ein Verfahren, das Folgendes beinhaltet:
Bewirken, dass Luft in einem Gehäuse (12) einer Vorrichtung eines Heizungs-, Lüftungs- und Klimatisierungssystems (HLK-Systems) gemäß einem der Ansprüche 4 bis 7 strömt; und
Rezirkulieren mindestens eines ersten Anteils der Luft, die innerhalb des Gehäuses (12) strömt, ohne den ersten Anteil der Luft aus dem Gehäuse (12) abzugeben.

9. Verfahren gemäß Anspruch 8, wobei das Rezirkulieren mindestens eines ersten Anteils der Luft, die innerhalb des Gehäuses (12) strömt, ohne den ersten Anteil der Luft aus dem Gehäuse (12) abzugeben, das Rezirkulieren der gesamten Luft, die innerhalb des Gehäuses (12) strömt, ohne irgendeinen Teil der Luft aus dem Gehäuse (12) abzugeben, umfasst.

10. Verfahren gemäß Anspruch 8, das ferner Folgendes beinhaltet:
Abgeben eines zweiten Anteils der Luft aus dem Gehäuse (12) in eine Struktur; und
Erhalten von Luft aus der Struktur in das Gehäuse (12); und/oder
Erhöhen des Saugdrucks eines Kompressors in einem Kältemittelkreislauf, der mit dem Gehäuse (12) assoziiert ist.

11. Verfahren gemäß Anspruch 10, das ferner Folgendes beinhaltet:
Erwärmen der Luft, die in dem Gehäuse strömt, mit einem ersten Wärmetauscher (38), der in dem Gehäuse (12) angeordnet ist; und
Präsentieren von Luft, die mindestens teilweise innerhalb des Gehäuses (12) von dem ersten Wärmetauscher (38) rezirkuliert wird, gegenüber einem zweiten Wärmetauscher (42), der in dem Gehäuse (12) angeordnet ist.

12. Verfahren gemäß Anspruch 11, das ferner das Austauschen von Wärme zwischen der Luft, die mindestens teilweise innerhalb des Gehäuses (12) von dem ersten Wärmetauscher (38) rezirkuliert wird, und Kältemittel in dem zweiten Wärmetauscher (42) und/oder das Bereitstellen von Kältemittel von dem zweiten Wärmetauscher (42) für den Kompressor und das Komprimieren des von dem zweiten Wärmetauscher (42) bereitgestellten Kältemittels beinhaltet.

## Revendications

1. Un dispositif comprenant :
un boîtier (12) ;
un orifice d'entrée de boîtier (15C) défini dans le boîtier (12) et configuré pour recevoir de l'air provenant du boîtier (12) ;
un orifice d'évacuation de boîtier (15B) défini dans le boîtier (12) et configuré pour recevoir de l'air provenant de l'orifice d'entrée de boîtier (15C) ;
un orifice de retour de boîtier (15A) défini dans le boîtier (12) et configuré pour recevoir de l'air provenant de l'orifice d'évacuation de boîtier ; **caractérisé en ce que** le boîtier inclut :
une trappe d'air multipositions disposée dans le boîtier (12), la trappe d'air multipositions incluant :
une section de trappe d'orifice de sortie (24) repositionnable pour se mettre en prise avec l'orifice d'entrée de boîtier (15C) et l'orifice d'évacuation de boîtier (15B) de telle sorte qu'au moins une portion d'air provenant de l'orifice d'entrée de boîtier (15C) peut être évacuée de l'orifice d'évacuation de boîtier (15B) jusque dans le boîtier (12) ; et
une section de trappe d'orifice d'entrée repositionnable pour se mettre en prise avec l'orifice de retour de boîtier (15A) de telle sorte qu'au moins une portion de l'air provenant de l'orifice d'évacuation de boîtier (15B) peut être remise en circulation jusqu'à l'orifice d'entrée de boîtier (15C).

2. Le dispositif de la revendication 1, dans lequel la section de trappe d'orifice de sortie (24) est en outre repositionnable pour fermer au moins un orifice d'évacuation (18) allant du boîtier (12) jusqu'à une structure de telle sorte que la totalité de l'air peut être remise en circulation à l'intérieur du boîtier (12) ; et/ou dans lequel la section de trappe d'orifice de sortie (24) est en outre repositionnable pour au moins partiellement ouvrir au moins un orifice d'évacuation (18) allant du boîtier (12) jusqu'à une structure de telle sorte qu'une portion de l'air peut être évacuée du boîtier (12) jusqu'à la structure et une autre portion de l'air peut être remise en circulation à l'intérieur du boîtier (12).

3. Le dispositif de la revendication 1 ou de la revendication 2, dans lequel la trappe d'orifice d'entrée est en outre repositionnable pour au moins partiellement ouvrir un orifice d'entrée de remise en circulation (16) configuré pour recevoir de l'air provenant de la structure.

4. Un système de chauffage, de ventilation, et de climatisation (CVC) comprenant un dispositif selon la revendication 1, dans lequel le boîtier (12) est configuré pour au moins partiellement remettre en circulation de l'air à l'intérieur du boîtier (12) ;
le système comprenant en outre :
une soufflante disposée dans le boîtier (12) et configurée pour amener de l'air à s'écouler ;
un premier échangeur de chaleur (38) disposé dans le boîtier (12) et configuré pour chauffer l'air ; et
un deuxième échangeur de chaleur (42) disposé dans le boîtier (12) et configuré pour échanger de la chaleur avec l'air.

5. Le système de la revendication 4, dans lequel la section de trappe d'orifice de sortie (24) est en outre repositionnable pour fermer au moins un orifice d'évacuation (18) allant du boîtier (12) jusqu'à une structure de telle sorte que la totalité de l'air peut être remise en circulation à l'intérieur du boîtier (12).

6. Le système de la revendication 4 ou de la revendication 5, dans lequel la section de trappe d'orifice de sortie (24) est en outre repositionnable pour au moins partiellement ouvrir au moins un orifice d'évacuation (18) allant du boîtier (12) jusqu'à une structure de telle sorte qu'une portion de l'air peut être évacuée du boîtier (12) jusqu'à la structure et une autre portion de l'air peut être remise en circulation à l'intérieur du boîtier (12) ; et/ou dans lequel la trappe d'orifice d'entrée est en outre repositionnable pour au moins partiellement ouvrir un orifice d'entrée de remise en circulation (16) configuré pour recevoir de l'air provenant de la structure.

7. Le système de l'une quelconque des revendications 4 à 6, comprenant en outre un circuit de réfrigérant incluant au moins :
un compresseur configuré pour recevoir du réfrigérant provenant du deuxième échangeur de chaleur (42), comprimer le réfrigérant, et fournir du réfrigérant comprimé au premier échangeur de chaleur (38) ; et
un dispositif de détente configuré pour recevoir le réfrigérant comprimé provenant du premier échangeur de chaleur (38), détendre le réfrigérant comprimé, et fournir du réfrigérant détendu au deuxième échangeur de chaleur (42), et/ou comprenant un élément chauffant disposé dans le boîtier et configuré pour chauffer l'air dans le boîtier (12).

8. Un procédé comprenant :
le fait d'amener de l'air à s'écouler dans un boîtier (12) d'un dispositif d'un système de chauffage, de ventilation, et de climatisation (CVC) selon l'une quelconque des revendications 4 à 7 ; et
le fait de remettre en circulation au moins une première portion de l'air s'écoulant à l'intérieur du boîtier (12) sans évacuer la première portion de l'air du boîtier (12).

9. Le procédé de la revendication 8, dans lequel le fait de remettre en circulation au moins une première portion de l'air s'écoulant à l'intérieur du boîtier (12) sans évacuer la première portion de l'air du boîtier (12) inclut le fait de remettre en circulation la totalité de l'air s'écoulant à l'intérieur du boîtier (12) sans évacuer quelque partie que ce soit de l'air du boîtier (12).

10. Le procédé de la revendication 8, comprenant en outre :
le fait d'évacuer une deuxième portion de l'air du boîtier (12) jusque dans une structure ; et
le fait de recevoir de l'air provenant de la structure jusque dans le boîtier (12) ; et/ou le fait d'augmenter la pression d'aspiration d'un compresseur dans un circuit de réfrigérant associé au boîtier (12).

11. Le procédé de la revendication 10, comprenant en outre :
le fait de chauffer l'air s'écoulant dans le boîtier avec un premier échangeur de chaleur (38) disposé dans le boîtier (12) ; et
le fait de présenter de l'air au moins partiellement remis en circulation à l'intérieur du boîtier (12) depuis le premier échangeur de chaleur (38) jusqu'à un deuxième échangeur de chaleur (42) disposé dans le boîtier (12).

12. Le procédé de la revendication 11, comprenant en outre le fait d'échanger de la chaleur entre l'air au moins partiellement remis en circulation à l'intérieur du boîtier (12) depuis le premier échangeur de chaleur (38) et du réfrigérant dans le deuxième échangeur de chaleur (42) et/ou le fait de fournir du réfrigérant depuis le deuxième échangeur de chaleur (42) jusqu'au compresseur et de comprimer le réfrigérant fourni depuis le deuxième échangeur de chaleur (42).
